# EUROPEAN PATENT SPECIFICATION

(11) **EP 3 784 081 B1**
(45) Date of publication and mention of the grant of the patent: **04.05.2022**
(21) Application number: 19724625.9
(22) Date of filing: 19.04.2019
(51) Int. Cl.: A41D 1/084, A41D 13/015, A41D 31/02

(54) **METHOD FOR PROVIDING A PADDING**
VERFAHREN ZUR BEREITSTELLUNG EINER POLSTERUNG
PROCÉDÉ DE FOURNITURE D'UN REMBOURRAGE

(30) Priority: 24.04.2018 IT 201800004804
(43) Date of publication of application: 03.03.2021
(73) Proprietor: CYTECH S.R.L., 31020 San Vendemiano (Treviso) (IT)
(72) Inventor: COCCIA, Stefano, 31015 Conegliano (IT); GARGANO, Francesco, 35000 Slavonski Brod (HR)
(74) Representative: GLP S.R.L.
(86) International application number: PCT/IB2019/053260
(87) International publication number: WO 2019/207444

(56) References cited:
- WO-A1-2016/149459
- US-A1- 2017 135 427

## Description

The present invention relates to a method for providing a padding and a padding obtained with the method, in particular of the type that forms part of a cycling pad for cycling shorts or pants. US 2017/135427 A1 discloses a method according to the preamble of claim 1. WO 2016/149459 A1 discloses a padding according to the preamble of claim 9.

Such conventional pairs of cycling shorts are usually made up of several parts, including a cycling pad made of chamois leather or of synthetic material, and are joined together in order to cover and protect the intimate parts of the cyclist, who usually does not wear underwear when he or she wears cycling shorts.

The cycling pad must therefore usually be in direct contact with the skin of the user.

In the zone where one rests on the saddle, where the greatest pressures are, it is known to place a first layer of padding, also known as a "top", which is a flexible and elastic layer constituted by a fabric, in contact with the skin, to which, for example, a polyurethane foam of thickness comprised between one and five millimeters is added, with optional application underneath of an additional reinforcement fabric.

Reinforcement paddings can then be added to the "top", with thickness variable between one and twenty millimeters and which occupy the central portion of the fabric, and which can be combined together to protect the areas of the cyclist's body in contact with the saddle.

These latter items can be assembled with the rest of the cycling pad via thermoforming or via high frequency or with an adhesive; it is also common and very widespread to use stitching for assembly.

One of the problems known nowadays is the effect known as "hardening of the edges of the padding": in fact, during the manufacture of cycling pads, the padding is "joined" along its perimeter with the covering, which can be done in two ways: by stitching or by thermoforming, in which the entire perimeter of the edge of the padding is compressed and permanently deformed by using heat (at about 200°C), and the padding is squashed against the covering and anchored with a thermo-adhesive film.

Considering that in the squashed zones the thickness is reduced from about twelve millimeters (summing the thickness of the cover and the thickness of the padding) to two millimeters, it can be seen how these "joining seams" harden the cycling pad and can create a nuisance for the cyclist.

Furthermore, conventional paddings are usually made using polyurethane foams, which have multiple drawbacks, such as a high cost of production which entails the generation of scraps or discarded material during such production, such material being classified by Italian law as hazardous waste; the high consumption of CO₂; a high cost of transport owing to the volume occupied by such foams; the use of glues or film adhesives which, with washing and use of the product with which the paddings are associated, are subject to deterioration with consequent delamination or detachment; a reduction over time of the elasticity characteristic of the material after continual use or washing, with consequent necessity to replace the entire product with which the paddings are associated; excessive localized heating owing to chafing which for example occur during use of a pair of cycling shorts with which such paddings are associated; possible skin irritations owing to the use of adhesives; difficulty in drying the product with which the paddings are associated owing to their intrinsic property of absorbing water or sweat; and finally a difficulty in obtaining, for the same padding, zones with different load-bearing capacity which can be obtained by varying the density of the foam or its thickness but which worsen the wearability, for example, of the pair of cycling shorts.

The aim of the present application is therefore to solve the above mentioned technical problems, eliminating the drawbacks in the cited known art and hence providing a method for obtaining a padding, in particular, but not exclusively, for cycling pants which makes it possible to obtain an excellent and specific protection for the user and a comfort that is constant over time.

Within the above aim, an object of the invention is to provide a method for providing, in particular, a padding of the type belonging to a cycling pad for cycling shorts or pants which improves environmental sustainability by eliminating the use of adhesives and reducing the use of CO₂.

Another object is to obtain a method that, in addition to the above characteristic, adds that of eliminating the production of scraps or material discarded during the production, and which is simple to carry out.

Another object is to obtain a method that makes it possible to reduce the production times of the paddings.

Another object is to provide a method that makes it possible to obtain a padding that withstands the stresses to which the product with which it is associated is subjected, and which also maintains its elasticity characteristics, even after multiple washes, and which has rapid drying times.

Another object is to obtain a method that makes it possible to obtain paddings with high breathability.

Another object is to provide a method that makes it possible to obtain a padding that has contained encumbrances and volumes for transport and a reduced overall weight.

Another object is to obtain a method that makes it possible to obtain paddings that do not retain heat and which do not overheat during their use.

Another object is to provide a method that makes it possible to obtain a padding that does not generate any kind of allergy in contact with the skin.

Another object is to obtain a method that makes it possible to provide paddings at low cost.

Another object is to obtain a method that can be carried out with the usual conventional systems.

This aim and these and other objects which will become better apparent hereinafter are achieved by a method for providing a padding, which is characterized in that it uses 3D printing by depositing a filament according to a microarchitecture that entails the definition of superimposed matrices that are adapted to define a structure composed of individual open cells, which are mutually connected and arranged mutually opposite and side by side, each one having a shape in plan view with a variable diameter which is obtained by way of superimposing elements that are substantially shaped like a truncated pyramid or like a truncated cone with a polygonal base.

Further characteristics and advantages of the invention will become better apparent from the detailed description of a particular, but not exclusive, embodiment, which is illustrated by way of non-limiting example in the accompanying drawings wherein:

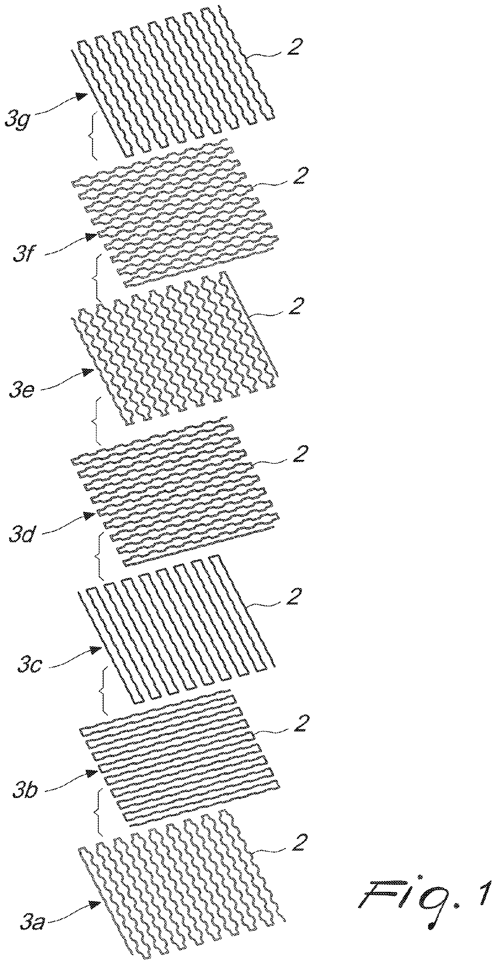

Figure 1 is an exploded view, in order to render the method more intelligible, of the deposition of the first seven layers of material using different colors for a better identification thereof also in the following description;

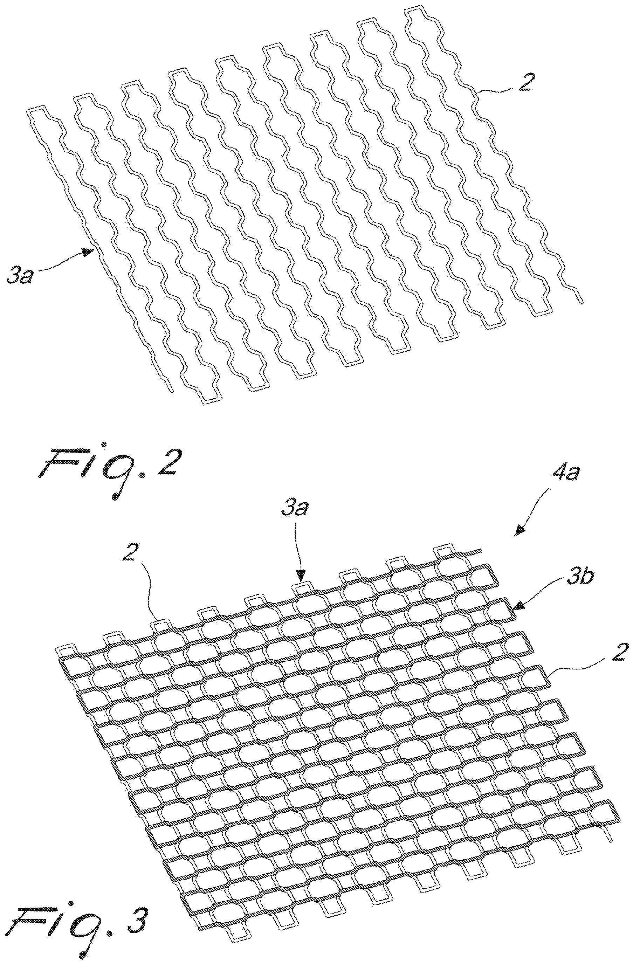

Figure 2 shows the deposition of a first layer;
Figure 3 shows the deposition of a second layer on the first layer, to define a first matrix;

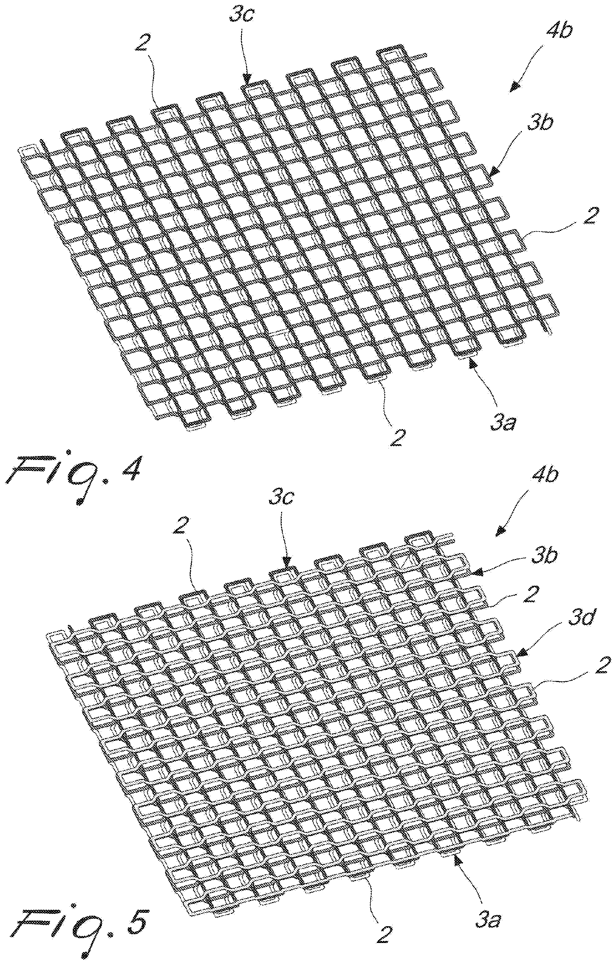

Figure 4 shows the deposition of a third layer on the two preceding layers, to define a second matrix;
Figure 5 shows the deposition of a fourth layer on the three preceding layers, to define a third matrix;

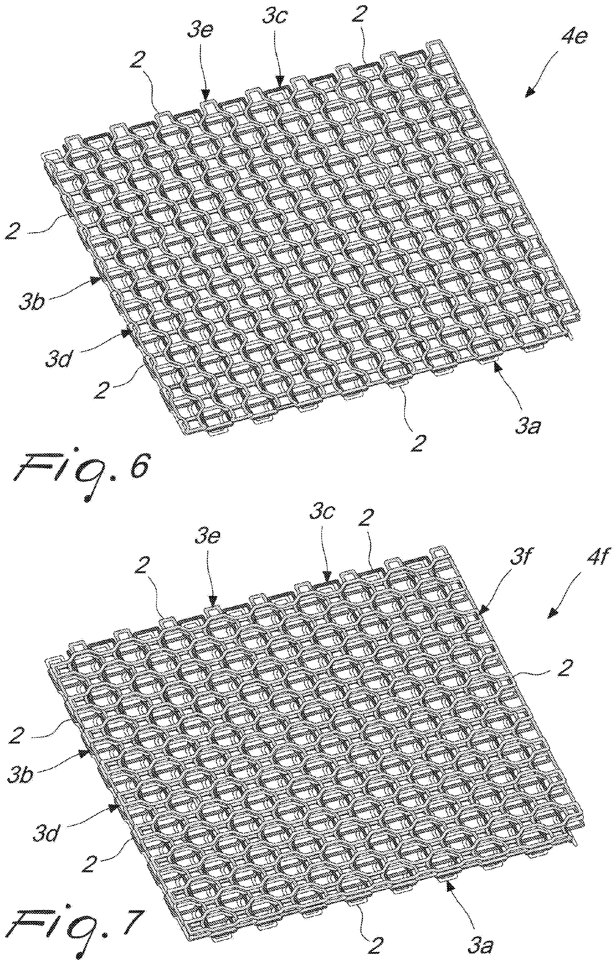

Figure 6 shows the deposition of a fifth layer on the four preceding layers, to define a fourth matrix;
Figure 7 shows the deposition of a sixth layer on the five preceding layers, to define a fifth matrix;

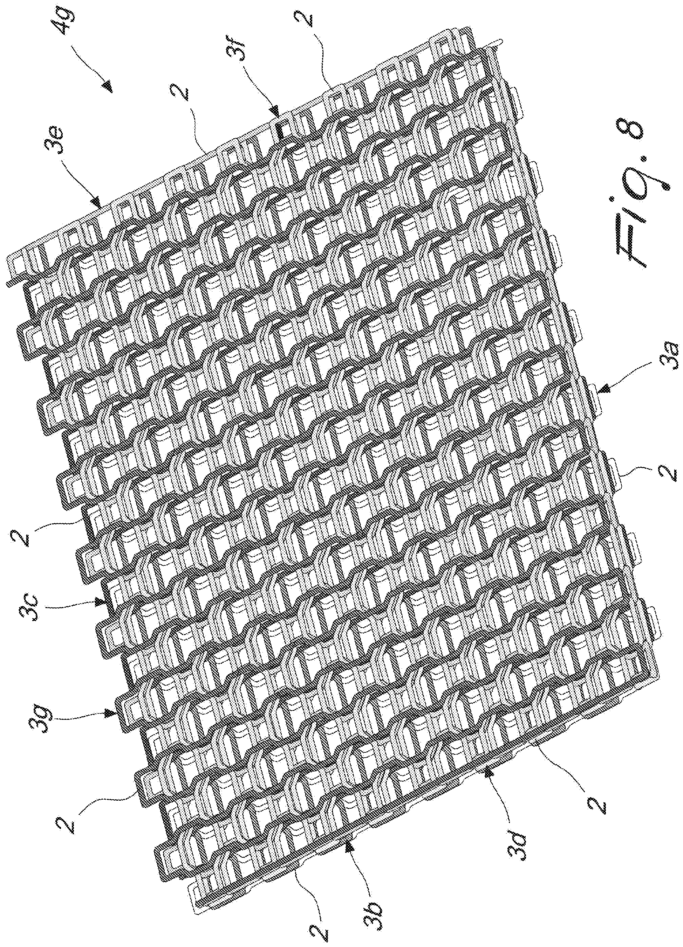

Figure 8 shows the deposition of a seventh layer on the six preceding layers, to define a sixth matrix;
Figure 9 is a perspective view of a series of a desired number of cells, defining the padding, which are obtained with the method;
Figure 10 is a plan view of the padding obtained with the method;

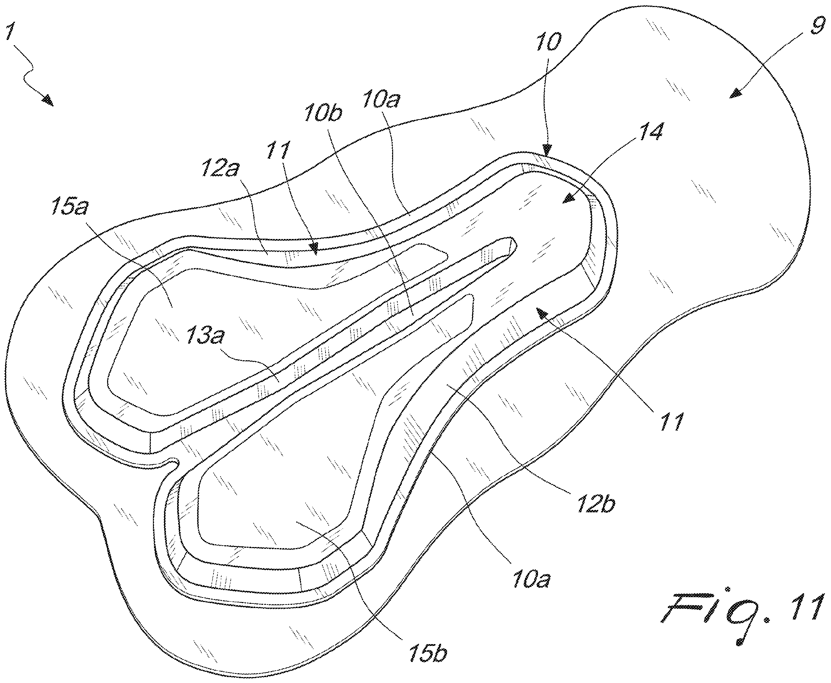

Figure 11 is a three-quarters side view of the padding;

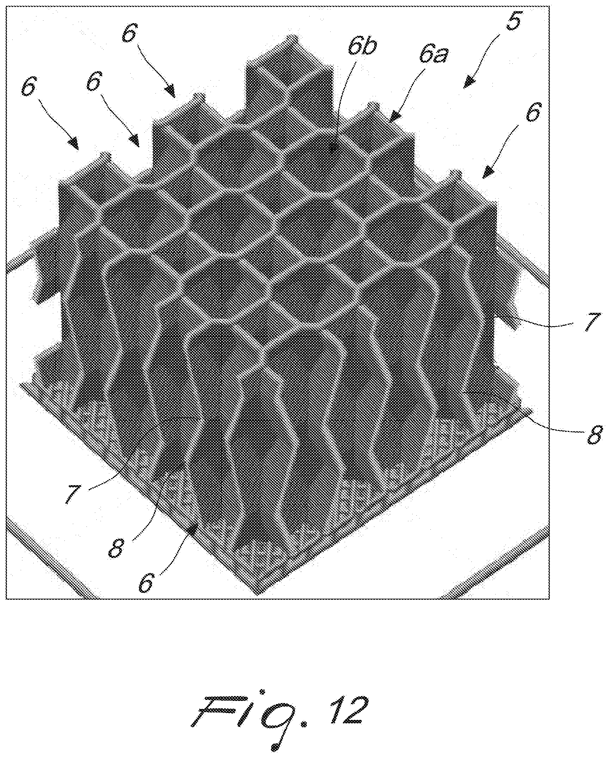

Figure 12 is a partially cross-sectional view of Figure 9.

In the embodiments illustrated below, individual characteristics shown in relation to specific examples may in reality be interchanged with other, different characteristics, existing in other embodiments.

With reference to the figures, the method for providing a padding 1 is illustrated, in particular a padding of the type that forms part of a cycling pad for cycling shorts or pants.

The method can use one of the various conventional methods of 3D printing, as their principal differences lie in the way that the various layers are printed.

One conventional method of 3D printing consists of a system for printing material by extrusion, in which the printer creates one layer at a time, spreading for example a layer of powder (plaster or resins) and using the inkjet head to print a binder in the transverse cross-section of the part.

The process is repeated until such time as all the layers have been printed so as to obtain the product of the desired shape.

It is also known to use materials that are fused or softened in order to produce, with multiple depositions, the various layers, for example Selective Laser Sintering (SLS) and Fused Deposition Modeling (FDM).

It is also known to deposit liquid materials which are hardened with various technologies.

For providing ultra-thin configurations, it is known to use the two-photon photopolymerization 3D microfabrication technique, in which the desired 3D object is traced in a block of gel by a concentrated laser, the gel being hardened to a solid at the points where the laser has been concentrated.

Once the 3D printing method and the material that constitutes the filament 2 and its diameter have been chosen, accordingly upon taking into consideration a series of technical parameters for using the chosen material, such as, for example, the temperature, the deposition speed, and the type of nozzle to use, all of which can modify the physical characteristics of the final product, the method carries out a deposition of a filament 2 according to a very precise microarchitecture.

Among all the materials available today, the material indicated here for the deposition printing of filament, by way of non-limiting example, is distinguished by the FlexMark 8 trademark.

Naturally the materials used may be more relevant according to specific requirements.

The accompanying drawings give an example illustration of only the first seven layers 3a, 3b, 3c, 3d, 3e, 3f, 3g, which are layers that are colored differently from each other in order to identify them more easily.

The specific microarchitecture chosen for the deposition of the layers entails the definition of various matrices, for example for the first seven layers identified in sequence with the numerals 4a, 4b, 4c, 4d, 4e, 4f, which, as they are formed, are mutually superimposed and adapted to define a structure 5 composed of individual open cells 6, which are mutually connected and arranged mutually opposite and side by side.

The peculiarity of the chosen microarchitecture is that it obtains a series of open cells 6 each one of which has a shape in plan view with a diameter that varies as the cell extends upward.

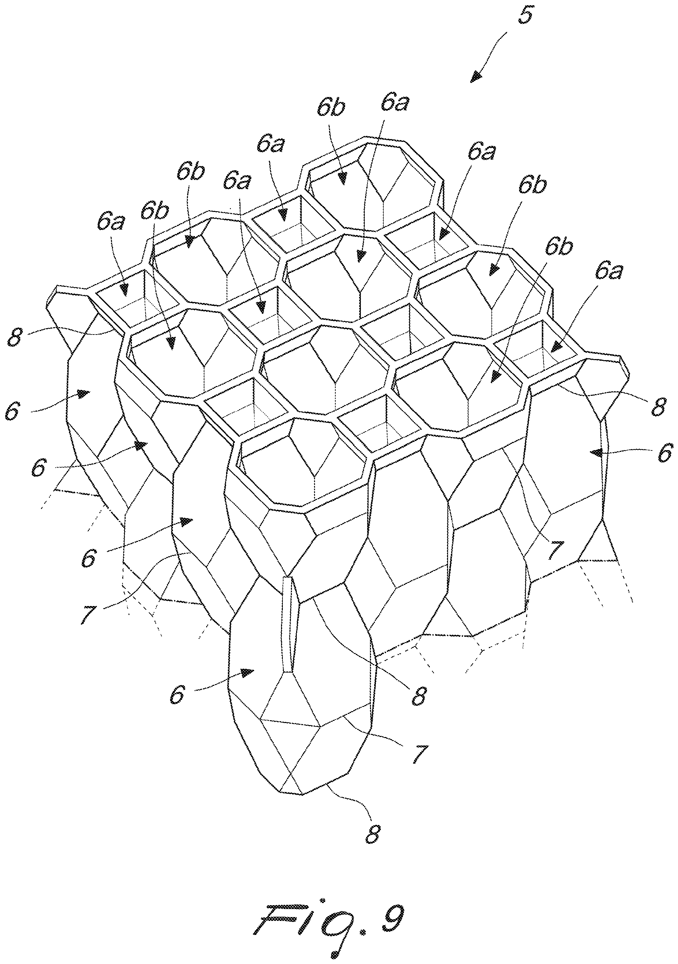

As shown in the accompanying figures, each open cell 6 is obtained by depositing, in sequence, layers of filament 2 which, starting for example from the first layer 3a, has a given geometry which, in the subsequent second layer 3b, has in plan view a slightly larger dimension, and so the layers grow until, as shown in Figure 9, the point or plane 7 of maximum dimension is reached.

Starting from such point or plane 7, the dimensions of the subsequent layers tend to decrease until the point or plane 8 is reached which presents, in plan view, the minimum dimension.

Then the dimension of the layers starts to increase again until a new point or plane 7 is reached which presents, in plan view, the maximum dimension.

Advantageously, but not exclusively, the height of the cell between the points or planes 7 and 8 is identical.

The microarchitecture creates many adjacent and mutually superimposed cells 6; advantageously it is possible to offset the adjacent open cells so that the point or plane 7 of maximum dimension in plan view of a row of open cells 6a corresponds to the point or plane 8 of minimum dimension in plan view of the adjacent row of open cells 6b, as shown in Figure 9.

The geometry of the various layers is such as to obtain the superimposition of elements or open cells 6 that are substantially shaped like a truncated pyramid or like a truncated cone with a polygonal base, for example an octagonal base.

In the specific embodiment shown, the layers are deposited by generating matrices which, if one performs a transverse cross-section on the resulting product, show a sequence of elements which have, in plan view, a substantially square and octagonal shape and the sides of which are shared with those of the adjacent cells.

For a truncated cone shape with a polygonal, for example circular, base, the layers are deposited by generating matrices which, if one performs a transverse cross-section on the resulting product, show a sequence of elements which have, in plan view, a substantially circular shape with mutually tangent sides.

In this case the microarchitecture generates individual open cells 6, each of which has a shape in space which can be likened substantially to the shape of a cask, having zones that are more or less free from material between adjacent cells.

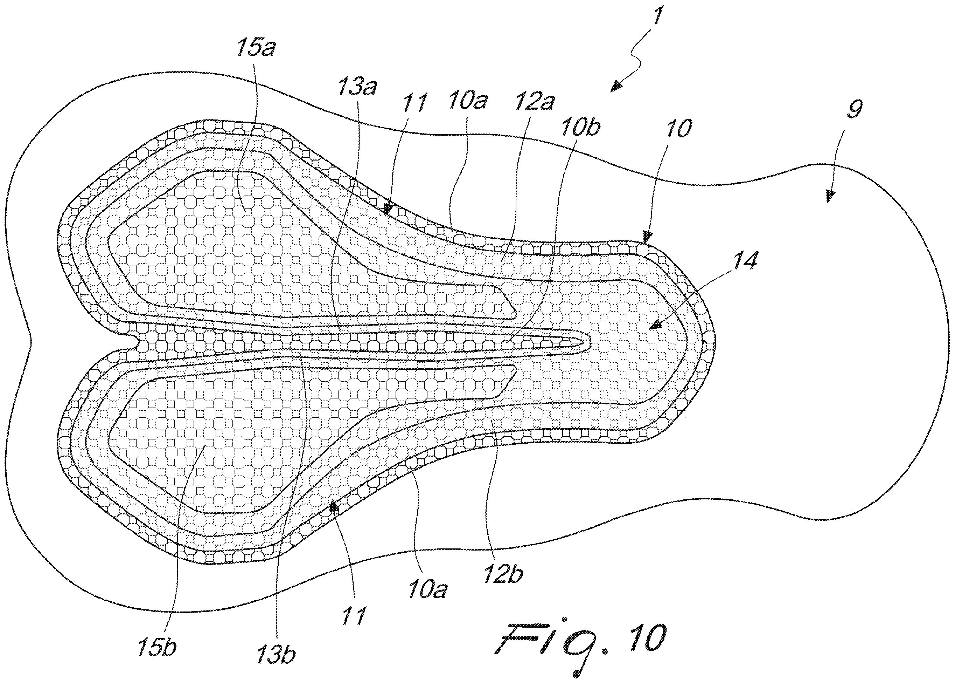

The shape and the superimposition of the individual layers is obviously carried out taking into account the shape of the product that it is desired to obtain; if it is desired to provide a padding 1, in particular a padding of the type belonging to a cycling pad for cycling shorts or pants, then, as shown in Figure 10, a flat outer perimetric first zone 9 is obtained with a very low thickness of the cells 6, for example tending toward zero, followed by a second zone 10 with a uniform thickness of the cells 6, for example two millimeters.

Advantageously the second zone 10 is substantially heart-shaped, the perimetric edge 10a of which is blended with a substantially straight branch 10b which is arranged along the median axis of the padding 1, of a chosen thickness.

Then follows a third zone 11, which is for example V-shaped in plan view so as to define a pair of external wings 12a, 12b and a pair of internal wings 13a, 13b which are arranged substantially along the median axis of the padding 1, with a thickness of the cells 6 that increases from the perimeter toward the center in the pair of external wings 12a, 12b and a thickness that decreases from the center toward the perimeter in the pair of internal wings 13a, 13b.

Advantageously the point of maximum elevation is the same for the pair of external wings 12a, 12b and for the pair of internal wings 13a, 13b.

Then follows a fourth zone 14, which surrounds the third zone 11 with a thickness of the cells 6 that exceeds that of the third zone 11.

In the specific embodiment shown, within the fourth zone 14 there are two fifth zones 15a, 15b, which are substantially mirror-symmetrical with respect to the median axis of the padding 1, with a thickness of the cells 6 that is different from that of the adjacent fourth zone 14 and of the adjacent pair of internal wings 13a, 13b of the third zone 11.

Thus it has been found that the invention fully achieves the intended aim and objects, a method having been obtained that makes it possible for example to obtain a padding, in particular, but not exclusively, for cycling pants, which has zones of differentiated thickness according to the specific requirements of the user so as to obtain an optimal and specific protection and a comfort that are constant over time, while at the same time improving environmental sustainability given that it eliminates the use of adhesives and reduces the use of CO₂.

The particular chosen shape of the microarchitecture and therefore of the cells makes it possible to achieve the characteristic of having an elastic bounce-back once a pressure thereon has ceased, the arrangement of the layers making it possible to obtain a desired density, load-bearing capacity and thickness at every desired point of the product that it is desired to obtain.

Furthermore the chosen shape of the microarchitecture makes it possible to have an optimal wearability, with an elastic bounce-back being obtained in every direction of the padding.

The use of the particular microarchitecture indicated makes it possible in fact to obtain deformable zones that at the same time are controlled and, owing to different heights of the cells, are also differentiated so as to increase the overall performance (protection and comfort) of the cycling pad, compared to conventional cycling pads, and this given that the microarchitecture indicated makes it possible to obtain a product that has characteristics, such as density, load-bearing capacity, breathability, flexibility/elasticity, and weight, which are not determined solely by the type of material used, but by the intrinsic shape of the microarchitecture.

The method further makes it possible to eliminate the production of scraps or discarded material during the production of the product and in particular of paddings, which are structurally adapted to optimally withstand the stresses to which for example the pair of cycling shorts with which they are associated are subjected.

The paddings thus obtained therefore keep their elasticity constant over time, even after multiple washes; they have rapid drying times, high breathability, contained encumbrances and volumes for transport, and reduced overall weight; and they do not trap heat, they do not overheat during use, they do not generate any type of allergy in contact with the skin, and they are of low cost.

Finally it should be noted that the method can also be used to provide, in conjunction or separately, other parts that make up the padding, in addition to the flat outer perimetric first zone 9, the second zone 10, the third zone 11, the fourth zone 14, the fifth zones 15a, 15b, or even other parts that can be combined with the padding 1, such as the covering so as to obtain a single product, i.e. the complete cycling pad or the pair of cycling shorts, but which have, for the various parts indicated, different desired characteristics and performance, for example of load-bearing capacity, in one or more desired points or zones.

This increase of load-bearing capacity is obtained for example by keeping the same microarchitecture, but applying a change in the filling, for example using the same pattern while reducing its dimensions so as to have more material and less empty space.

Naturally the materials used as well as the dimensions of the individual components of the invention, such as the flat outer perimetric first zone 9, the second zone 10, the third zone 11, the fourth zone 14, the fifth zones 15a, 15b may be more relevant according to specific requirements.

This application claims priority from Italian Patent Application No. 102018000004804.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for providing a padding (1), using 3D printing **characterized by** depositing a filament (2) according to a microarchitecture that entails the definition of superimposed matrices that are adapted to define a structure composed of individual open cells (6), which are mutually connected and arranged mutually opposite and side by side, each one having a shape in plan view with a variable diameter which is obtained by way of superimposing elements that are substantially shaped like a truncated pyramid or like a truncated cone with a polygonal base.

2. The method according to claim 1, **characterized in that** said microarchitecture entails the definition of various matrices which, as they are formed, are mutually superimposed and adapted to define a structure (5) which is composed of said individual open cells (6), which are mutually connected and arranged mutually opposite and side by side, each one of said open cells (6) having, in plan view, a diameter that varies as each one of said cells (6) extends upward.

3. The method according to claims 1 and 2, **characterized in that** said microarchitecture defines cells (6) which are obtained by depositing in sequence layers of filament (2) which have a given geometry which, in the succession of layers, has in plan view a slightly larger dimension until a point or plane (7) of maximum transverse dimension is reached.

4. The method according to claims 1 and 3, **characterized in that** starting from said point or plane (7) the dimensions in plan view of the subsequent layers tend to decrease until a point (8) of minimum transverse dimension is reached, the dimension in plan view of the subsequent layers returning to increase until a new point or plane (7) of maximum transverse dimension is reached.

5. The method according to claims 1 and 4, **characterized in that** the height of each individual open cell (6) between said points (7, 8) is identical.

6. The method according to claims 1 and 4, **characterized in that** said microarchitecture creates a plurality of open cells (6) which are mutually superimposed and in which one cell adjacent to another cell is offset so that said point or plane (8) of minimum dimension in plan view of the adjacent row of open cells (6b) corresponds to said point or plane (7) of maximum dimension in plan view of a row of open cells (6a).

7. The method according to one or more of the preceding claims, **characterized in that** with said microarchitecture the superimposition is obtained of elements or open cells (6) which are substantially shaped like a truncated pyramid with an octagonal base, said layers being deposited by generating matrices which, if one performs a transverse cross-section on the resulting product, show a sequence of elements which have, in plan view, a substantially square and octagonal shape and the sides of which are shared with those of the adjacent cells.

8. The method according to one or more of the preceding claims, **characterized in that** with said microarchitecture the superimposition is obtained of elements or open cells (6) which are substantially shaped like a truncated cone with a polygonal or circular base, said layers being deposited by generating matrices which, if one performs a transverse cross-section on the resulting product, show a sequence of elements which have, in plan view, a substantially circular shape with mutually tangent sides so as to generate individual open cells (6), each of which has a shape in space which can be likened substantially to the shape of a cask, having zones that are more or less free from material between adjacent cells.

9. A padding (1) **characterized by** being obtained with said method as in one or more of the preceding claims, having a flat outer perimetric first zone (9) with a thickness of said cells (6) that tends toward zero, followed by a second zone (10) with a thickness of said cells (6) that is uniform and of higher value, said second zone (10) being substantially heart-shaped, the perimetric edge (10a) of which being blended with a substantially straight branch (10b) which is arranged along the median axis of said padding (1).

10. The padding according to claim 9, **characterized in that** a third zone (11) is adjacent to said second zone and is V-shaped in plan view so as to define a pair of external wings (12a, 12b) and a pair of internal wings (13a, 13b) which are arranged substantially along the median axis of said padding (1), with a thickness of said cells (6) that increases from the perimeter toward the center in said pair of external wings (12a, 12b) and a thickness that decreases from the center toward the perimeter in said pair of internal wings (13a, 13b), the point of maximum elevation being the same for said pair of external wings (12a, 12b) and for said pair of internal wings (13a, 13b).

11. The padding according to claims 9 and 10, **characterized in that** a fourth zone (14) is adjacent to said third zone (11) and surrounds said third zone (11) with a thickness of said cells (6) that is greater than that in said third zone (11), within said fourth zone (14) there being two fifth zones (15a, 15b), which are substantially mirror-symmetrical with respect to the median axis of said padding (1), with a thickness of said cells (6) that is different from that of said adjacent fourth zone (14) and said adjacent pair of internal wings (13a, 13b) of said third zone (11).

## Patentansprüche

1. Verfahren zum Bereitstellen einer Polsterung (1) unter Verwendung von 3D-Druck, **gekennzeichnet durch** das Aufbringen eines Filaments (2) gemäß einer Mikroarchitektur, die die Definition von überlagerten Matrizen umfasst, die dazu angepasst sind, eine Struktur zu definieren, die aus einzelnen offenen Zellen (6) zusammengesetzt ist, wobei die Zellen (6) miteinander verbunden und einander gegenüberliegend und nebeneinander angeordnet sind, und jede der Zellen (6) eine Form in Draufsicht mit einem variablen Durchmesser aufweist, die durch Überlagerung von Elementen erhalten wird, die im Wesentlichen die Form eines Pyramidenstumpfs oder eines Kegelstumpfs mit einer polygonalen Grundfläche aufweisen.

2. Verfahren nach Anspruch 1, **dadurch gekennzeichnet, dass** die Mikroarchitektur die Definition verschiedener Matrizen umfasst, die, wenn sie gebildet werden, sich gegenseitig überlagern und dazu angepasst sind, eine Struktur (5) zu definieren, die aus den einzelnen offenen Zellen (6) zusammengesetzt ist, wobei die Zellen (6) miteinander verbunden und einander gegenüber und nebeneinander angeordnet sind, und jede der offenen Zellen (6) in Draufsicht einen Durchmesser aufweist, der sich mit zunehmender Ausdehnung jeder der Zellen (6) nach oben verändert.

3. Verfahren nach den Ansprüchen 1 und 2, **dadurch gekennzeichnet, dass** die Mikroarchitektur Zellen (6) definiert, die durch aufeinanderfolgendes Aufbringen von Schichten aus dem Filament (2) erhalten werden, wobei die Schichten eine bestimmte Geometrie aufweisen, die in der Aufeinanderfolge der Schichten in Draufsicht eine etwas größere Abmessung aufweist, bis ein Punkt oder eine Ebene (7) mit maximaler Querabmessung erreicht ist.

4. Verfahren nach den Ansprüchen 1 und 3, **dadurch gekennzeichnet, dass** ausgehend von diesem Punkt oder dieser Ebene (7) die Abmessungen in Draufsicht der nachfolgenden Schichten tendenziell abnehmen, bis ein Punkt (8) mit minimaler Querabmessung erreicht ist, und die Abmessungen in Draufsicht der nachfolgenden Schichten wieder zunehmen, bis ein neuer Punkt oder eine neue Ebene (7) mit maximaler Querabmessung erreicht ist.

5. Verfahren nach den Ansprüchen 1 und 4, **dadurch gekennzeichnet, dass** die Höhe jeder einzelnen offenen Zelle (6) zwischen den Punkten (7, 8) identisch ist.

6. Verfahren nach einem der Ansprüche 1 und 4, **dadurch gekennzeichnet, dass** die Mikroarchitektur eine Vielzahl offener Zellen (6) bildet, die sich gegenseitig überlagern und in denen eine Zelle, die an eine andere Zelle angrenzt, so versetzt ist, dass der Punkt oder die Ebene (8) der minimalen Abmessung in Draufsicht der angrenzenden Reihe offener Zellen (6b) dem Punkt oder der Ebene (7) der maximalen Abmessung in Draufsicht einer Reihe offener Zellen (6a) entspricht.

7. Verfahren nach einem oder mehreren der vorhergehenden Ansprüche, **dadurch gekennzeichnet, dass** mit der Mikroarchitektur die Überlagerung durch Elemente oder offene Zellen (6) erzielt wird, die im Wesentlichen die Form eines Pyramidenstumpfes mit achteckiger Grundfläche aufweisen, wobei die Schichten durch Erzeugung von Matrizen aufgebracht werden, die, wenn ein Querschnitt durch das resultierende Produkt erstellt wird, eine Folge von Elementen aufweisen, die in Draufsicht eine im Wesentlichen quadratische und achteckige Form aufweisen und deren Seiten mit denen der benachbarten Zellen geteilt sind.

8. Verfahren nach einem oder mehreren der vorhergehenden Ansprüche, **dadurch gekennzeichnet, dass** mit der Mikroarchitektur die Überlagerung durch Elemente oder offene Zellen (6) erzielt wird, die im Wesentlichen die Form eines Kegelstumpfes mit polygonaler oder kreisförmiger Grundfläche aufweisen, wobei die Schichten durch die Erzeugung von Matrizen aufgebracht werden, die, wenn ein Querschnitt durch das resultierende Produkt erstellt wird, eine Folge von Elementen aufweisen, die in Draufsicht eine im Wesentlichen kreisförmige Form mit sich gegenseitig tangierenden Seiten aufweisen, sodass einzelne offene Zellen (6) gebildet werden, von denen jede eine Form im Raum aufweist, die im Wesentlichen mit der Form eines Fasses vergleichbar ist, mit Zonen, die mehr oder weniger frei von Material zwischen benachbarten Zellen sind.

9. Polsterung (1), **dadurch gekennzeichnet, dass** sie mit dem Verfahren nach einem oder mehreren der vorhergehenden Ansprüche erhalten wird, umfassend eine flache äußere perimetrische erste Zone (9) mit einer Dicke der Zellen (6), die gegen Null tendiert, gefolgt von einer zweiten Zone (10) mit einer Dicke der Zellen (6), die gleichmäßig und von höherem Wert ist, wobei die zweite Zone (10) im Wesentlichen herzförmig ist und ihr perimetrischer Rand (10a) in einen im Wesentlichen geraden Ast (10b) übergeht, der entlang der Mittelachse der Polsterung (1) angeordnet ist.

10. Polsterung nach Anspruch 9, **dadurch gekennzeichnet, dass** eine dritte Zone (11) an die zweite Zone angrenzt und in Draufsicht V-förmig ist, sodass sie ein Paar Außenflügel (12a, 12b) und ein Paar Innenflügel (13a, 13b) bildet, die im Wesentlichen entlang der Mittelachse der Polsterung (1) angeordnet sind, mit einer Dicke der Zellen (6), die in dem Paar von Außenflügeln (12a, 12b) vom Umfang zur Mitte hin zunimmt, und einer Dicke, die in dem Paar von Innenflügeln (13a, 13b) von der Mitte zum Umfang hin abnimmt, wobei der Punkt der maximalen Höhe für das Paar von Außenflügeln (12a, 12b) und für das Paar von Innenflügeln (13a, 13b) derselbe ist.

11. Polsterung nach Anspruch 9 und 10, **dadurch gekennzeichnet, dass** eine vierte Zone (14) an die dritte Zone (11) angrenzt und die dritte Zone (11) mit einer Dicke der Zellen (6) umgibt, die größer ist als die in der dritten Zone (11), wobei innerhalb der vierten Zone (14) zwei fünfte Zonen (15a, 15b) vorhanden sind, die im Wesentlichen spiegelsymmetrisch in Bezug auf die Mittelachse der Polsterung (1) angeordnet sind, mit einer Dicke der Zellen (6), die sich von derjenigen der angrenzenden vierten Zone (14) und des angrenzenden Paars von inneren Flügeln (13a, 13b) der dritten Zone (11) unterscheidet.

## Revendications

1. Un procédé de réalisation d'un rembourrage (1), en utilisant une impression 3D, **caractérisé par** le fait de déposer un filament (2) selon une microarchitecture qui implique la définition de matrices superposées qui sont adaptées à définir une structure composée de cellules individuelles ouvertes (6), qui sont mutuellement connectées et agencées mutuellement de façon opposée et côte à côte, chacune d'elle ayant, vue en plan, une forme à diamètre variable qui est obtenue au moyen de la superposition d'éléments qui ont sensiblement la forme d'un tronc de pyramide ou d'un tronc de cône à base polygonale.

2. Le procédé selon la revendication 1, **caractérisé en ce que** ladite microarchitecture implique la définition de différentes matrices qui, au fur et à mesure de leur formation, sont mutuellement superposées et adaptées pour définir une structure (5) qui est composée desdites cellules ouvertes individuelles (6), qui sont mutuellement connectées et disposées mutuellement de façon opposée et côte à côte, chacune desdites cellules ouvertes (6) ayant, vue en plan, un diamètre qui varie au fur et à mesure de l'extension vers le haut de chacune desdites cellules (6).

3. Le procédé selon les revendications 1 et 2, **caractérisé en ce que** ladite microarchitecture définit des cellules (6) qui sont obtenues en déposant en séquence des couches de filament (2) qui ont une géométrie donnée qui, dans la succession des couches, a, vue en plan, une dimension légèrement plus grande jusqu'à ce qu'un point ou plan (7) de dimension transversale maximale soit atteint.

4. Le procédé selon les revendications 1 et 3, **caractérisé en ce qu'**à partir dudit point ou plan (7) les dimensions en vue en plan des couches successives tendent à diminuer jusqu'à atteindre un point (8) de dimension transversale minimale, la dimension en vue en plan des couches successives recommençant à augmenter jusqu'à ce qu'un nouveau point ou plan (7) de dimension transversale maximale soit atteint.

5. Le procédé selon les revendications 1 et 4, **caractérisé en ce que** la hauteur de chaque cellule individuelle ouverte (6) entre lesdits points (7, 8) est identique.

6. Le procédé selon les revendications 1 et 4, **caractérisé en ce que** ladite microarchitecture crée une pluralité de cellules ouvertes (6) qui sont mutuellement superposées et dans lesquelles une cellule adjacente à une autre cellule est décalée de sorte que ledit point ou plan (8) de la dimension minimale en vue en plan de la rangée adjacente de cellules ouvertes (6b) correspond audit point ou plan (7) de dimension maximale en vue en plan d'une rangée de cellules ouvertes (6a).

7. Le procédé selon une ou plusieurs des revendications précédentes, **caractérisé en ce qu'**avec ladite microarchitecture, la superposition est obtenue d'éléments ou de cellules ouvertes (6) qui ont sensiblement la forme d'une pyramide tronquée à base octogonale, lesdites couches étant déposées par le fait de générer des matrices qui, si l'on effectue une coupe transversale du produit résultant, montrent une suite d'éléments qui ont, en vue en plan, une forme sensiblement carrée et octogonale et dont les côtés sont partagés avec ceux des cellules adjacentes.

8. Le procédé selon une ou plusieurs des revendications précédentes, **caractérisé en ce qu'**avec ladite microarchitecture, la superposition est obtenue d'éléments ou de cellules ouvertes (6) qui ont sensiblement une forme assimilable à un cône tronqué à base polygonale ou circulaire, lesdites couches étant déposés en générant des matrices qui, si l'on effectue une coupe transversale sur le produit résultant, montrent une séquence d'éléments qui ont, en vue en plan, une forme sensiblement circulaire avec des côtés tangents entre eux de manière à générer des cellules ouvertes individuelles (6), dont chacune a une forme dans l'espace assimilable sensiblement à la forme d'un fût, présentant des zones plus ou moins exemptes de matière entre des cellules adjacentes.

9. Un rembourrage (1) **caractérisé en ce qu'**il est obtenu avec ledit procédé selon une ou plusieurs des revendications précédentes, ayant une première zone périmétrique extérieure plate (9) avec une épaisseur desdites cellules (6) qui tend vers zéro, suivie par une deuxième zone (10) avec une épaisseur desdites cellules (6) qui est uniforme et de valeur plus élevée, ladite deuxième zone (10) étant sensiblement en forme de cœur, dont le bord périmétrique (10a) se confond avec une branche sensiblement rectiligne (10b) qui est agencée selon l'axe médian dudit rembourrage (1).

10. Le rembourrage selon la revendication 9, **caractérisé en ce qu'**une troisième zone (11) est adjacente à ladite deuxième zone et est en forme de V en vue en plan de manière à définir une paire d'ailes externes (12a, 12b) et une paire d'ailes internes (13a, 13b) qui sont agencées sensiblement selon l'axe médian dudit rembourrage (1), avec une épaisseur desdites cellules (6) qui augmente du périmètre vers le centre dans ladite paire d'ailes externes (12a, 12b) et une épaisseur qui décroît du centre vers le périmètre dans ladite paire d'ailes internes (13a, 13b), le point d'élévation maximum étant le même pour ladite paire d'ailes externes (12a, 12b) et pour ladite paire d'ailes internes (13a, 13b).

11. Le rembourrage selon les revendications 9 et 10, **caractérisé en ce qu'**une quatrième zone (14) est adjacente à ladite troisième zone (11) et entoure ladite troisième zone (11) avec une épaisseur desdites cellules (6) qui est plus grande que celle de ladite troisième zone (11), deux cinquièmes zones (15a, 15b) se trouvant à l'intérieur de ladite quatrième zone (14), qui sont sensiblement symétriques par rapport à l'axe médian dudit rembourrage (1), avec une épaisseur desdites cellules (6) qui est différente de celle de ladite quatrième zone adjacente (14) et de ladite paire adjacente d'ailes internes (13a, 13b) de ladite troisième zone (11).
